# EUROPÄISCHE PATENTSCHRIFT

(11) **EP 1 449 308 B1**
(45) Veröffentlichungstag und Bekanntmachung des Hinweises auf die Patenterteilung: **09.03.2005**
(21) Anmeldenummer: 02774460.6
(22) Anmeldetag: 15.10.2002
(51) Int. Cl.: H04B 1/12, H04B 1/10, H03G 3/20

(54) **VORRICHTUNG UND VERFAHREN ZUR KORREKTUR VON PHASENSPRÜNGEN IN EMPFANGSSIGNALEN VON MOBILSTATIONEN**
DEVICE AND METHOD FOR CORRECTING SUDDEN PHASE CHANGES IN RECEPTION SIGNALS OF MOBILE STATIONS
PROCEDE ET DISPOSITIF DE CORRECTION DE SAUTS DE PHASE DANS DES SIGNAUX DE RECEPTION DE STATIONS MOBILES

(30) Priorität: 27.11.2001 DE 10158079
(43) Veröffentlichungstag der Anmeldung: 25.08.2004
(73) Patentinhaber: Infineon Technologies AG, 81669 München (DE)
(72) Erfinder: GUNZELMANN, Bertram, 86343 Königsbrunn (DE); BILGIC, Attila, 85551 Kirchheim (DE); WENZEL, Dietmar, 81549 München (DE); WÜRTH, Robert, 81827 München (DE)
(74) Vertreter: Graf Lambsdorff, Matthias, Dr.
(86) Internationale Anmeldenummer: PCT/DE2002/003906
(87) Internationale Veröffentlichungsnummer: WO 2003/049300

(56) Entgegenhaltungen:
- US-A- 5 170 392
- US-A- 6 044 112
- US-A- 6 052 572

## Beschreibung

Die vorliegende Erfindung bezieht sich allgemein auf das Gebiet der Mobilfunk-Empfängerschaltungen und betrifft insbesondere ein Verfahren und eine Vorrichtung zur Korrektur von Phasensprüngen in Empfangssignalen.

In Hochfrequenz-Empfängerschaltungen von Mobilstationen sind nach dem derzeitigen Stand der Technik in der Regel Verstärkerstufen, sogenannte "Low Noise Amplifier" (LNA), mit zwei oder mehreren schaltbaren Verstärkungsfaktoren enthalten. Beispielsweise ist die Verstärkerstufe für zwei Verstärkungsfaktoren konfigurierbar, der eine mit +15 dB, der andere mit -5 dB, um den jeweiligen Empfangsfeldstärken, die von vielen Parametern, insbesondere aber von der Entfernung zur nächsten Basisstation, abhängen, Rechnung zu tragen und den Empfänger der Mobilstation bestmöglich auszusteuern.

Eine Umschaltung zwischen den Verstärkungsfaktoren geht meist mit einem Phasensprung im Ausgangssignal einher, da die Verstärkerstufe bei den einzelnen Verstärkungsfaktoren beispielsweise eine unterschiedliche Gruppenlaufzeit hat oder andere schaltungstechnisch bedingte Phasenänderungen auftreten. Diese Phasensprünge verschlechtern die Leistungsfähigkeit des Empfangssystems erheblich, da die in zeitlicher Nachbarschaft zum Phasensprung übertragenen Daten vom Empfänger fehlinterpretiert werden. Bei häufigem Umschalten der Verstärkerstufen steigt somit die Bitfehlerhäufigkeit signifikant an.

In bisher bekannten Systemen wurde keine spezielle Korrektur bzw. Kompensation von Phasensprüngen vorgenommen. Vielmehr wurde die Fähigkeit des Signalempfängers, z.B. des "Equalisers" bei GSM- und EDGE-kompatiblen Signalen und des "Rake-Receivers" bei UMTS-kompatiblen Signalen, genutzt, Phasenänderungen vergleichsweise langsam auszuregeln wie z. B. in US 5170392. Aufgrund des sehr komplexen Algorithmus, der in diesen Fällen zum Einsatz kommt, ist die Regelung meist träge und kann daher auf schnelle und hohe Phasensprünge nur unzureichend reagieren. Das Empfangssignal kann bisher deshalb in einem vergleichsweise langen Zeitraum nicht korrekt ausgewertet werden, was eine entsprechende Erhöhung der Bitfehlerrate zur Folge hat.

Es ist somit Aufgabe der vorliegenden Erfindung, ein Verfahren anzugeben bzw. eine entsprechende Vorrichtung zu beschreiben, das bzw. die Phasensprünge im Empfangssignal korrigieren bzw. kompensieren kann, um einen nahezu ungestörten Empfang trotz Umschaltung der Verstärkungsfaktoren zu gewährleisten.

Dabei gelten folgende weitere Bedingungen bzw. Problemstellungen, die möglichst ebenfalls gelöst werden sollen:
a) Phasensprünge sollen bis auf einen vernachlässigbaren Phasenfehler korrigiert bzw. kompensiert werden.
b) Die Korrektur bzw. Kompensation soll mit ausschließlich digitalen Mitteln erfolgen.
c) Die Korrektur soll schnell erfolgen, d.h. wesentlich schneller als bei einem "Equaliser" oder "Rake-Receiver".
d) Der Signalfluss soll dabei nicht unterbrochen werden.
e) Das Verfahren soll kompatibel mit bestehenden analogen Verstärkerschaltungen und deren Ansteuerschaltungen sein.
f) Bereits verfügbare Mittel zur Frequenzkorrektur des Empfangssignals sollen für die Phasensprungkorrektur mit verwendet werden.
g) Die für die Phasensprungkorrektur erforderlichen Einrichtungen sollen in demselben Baustein integrierbar sein wie der digitale Teil des Signalempfängers.
h) Es soll kein zusätzlicher Anschluss am Baustein benötigt werden.
i) Die Vorrichtung und das Verfahren soll insbesondere dazu geeignet sein, in Mobilstationen gemäß den Standards GSM, EDGE, UMTS FDD, UMTS TDD und TIA/EIA-136 (IS-136) eingesetzt werden zu können.

Diese Aufgabe und die weiteren Bedingungen und Problemstellungen werden durch die kennzeichnenden Merkmale der unabhängigen Patentansprüche gelöst. Vorteilhafte Weiterbildungen und Ausgestaltungen sind in den Unteransprüchen angegeben.

Ein wesentlicher Gedanke der Erfindung liegt im Einsatz einer Einrichtung zur Phasenkorrektur sowie einer gemeinsamen Steuereinheit, welche den Verstärkungsfaktor der Verstärkerstufe schaltet und zeitlich darauf abgestimmt Phasenkorrekturwerte geeigneter Grösse an die Einrichtung zur Phasenkorrektur liefert, wobei die Steuereinheit die Kenntnis über feste Parameter wie Verzögerungszeiten und Phasensprungeigenschaften beim Umschalten der Verstärkerstufen nutzt, und zwar in der Weise, dass mindestens die oben genannte Bedingung a) erfüllt wird.

Die Erfindung wird nachfolgend anhand der Zeichnungsfiguren näher erläutert. Es zeigen :
Fig.1 eine allgemeine Ausführungsform einer erfindungsgemäßen Vorrichtung.
Fig.2 eine weitere Ausführungsform mit einer zusätzlichen Frequenzkorrektur;
Fig.3 eine zu der in Fig.2 gezeigten Ausführungsform alternative Ausführungsform mit zusätzlicher Frequenzkorrektur;
Fig.4 eine allgemeine Ausführungsform der in der erfindungsgemäßen Vorrichtung vorgesehenen Einheit zur Phasensprungkorrektur;
Fig.5 die Struktur einer multipliziererfreien Anordnung für die Einheit zur Phasen- bzw. Frequenzkorrektur nach Fig.2 oder 3;
Fig.6 eine spezielle, aufwandsgünstige Ausführungsform der in der erfindungsgemäßen Vorrichtung vorgesehenen Einheit zur Phasensprungkorrektur;
Fig.7 eine weitere aufwandsgünstige Ausführungsform der in der erfindungsgemäßen Vorrichtung vorgesehenen Einheit zur Phasensprungkorrektur;
Fig.8 ein Diagramm zur Veranschaulichung der Phasendrehung durch die in Fig.6 dargestellte Einheit zur Phasensprungkorrektur;
Fig.9 ein Diagramm zur Veranschaulichung der Phasendrehung durch die in Fig.6 dargestellte Einheit zur Phasensprungkorrektur;
Fig.10 eine weitere Anordnung für die Einheit zur Phasen- bzw. Frequenzkorrektur mit einem den CORDIC-Algorithmus verwendenden Frequenzkorrekturglied.

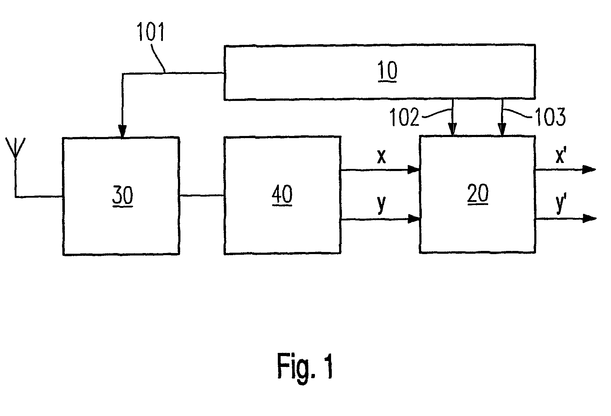

Die allgemeine Ausführungsform der Erfindung hat gemäß Fig. 1 eine Verstärkerstufe 30 zur Verstärkung des Empfangssignals mit mindestens zwei unterschiedlichen schaltbaren Verstärkungsfaktoren, welche mit dem zugehörigen Schaltsignal 101 geschaltet werden können.

Außerdem weist die allgemeine Ausführungsform der Erfindung mindestens eine Einrichtung zur Phasenkorrektur 20 im komplexwertigen Empfangssignalpfad nach dem Demodulator und A/D-Umsetzer 40, sowie ein Systemsteuergerät 10 auf, welches Steuergrössen 102, 103 für die Phasenkorrektur und das Schaltsignal 101 für die Verstärkerstufe ausgibt.

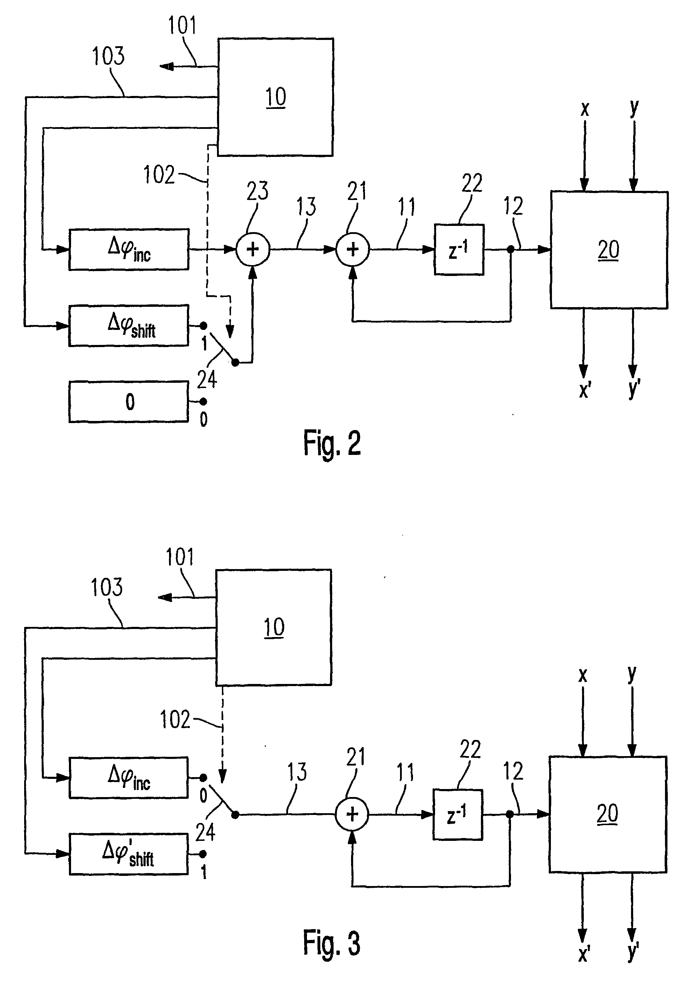

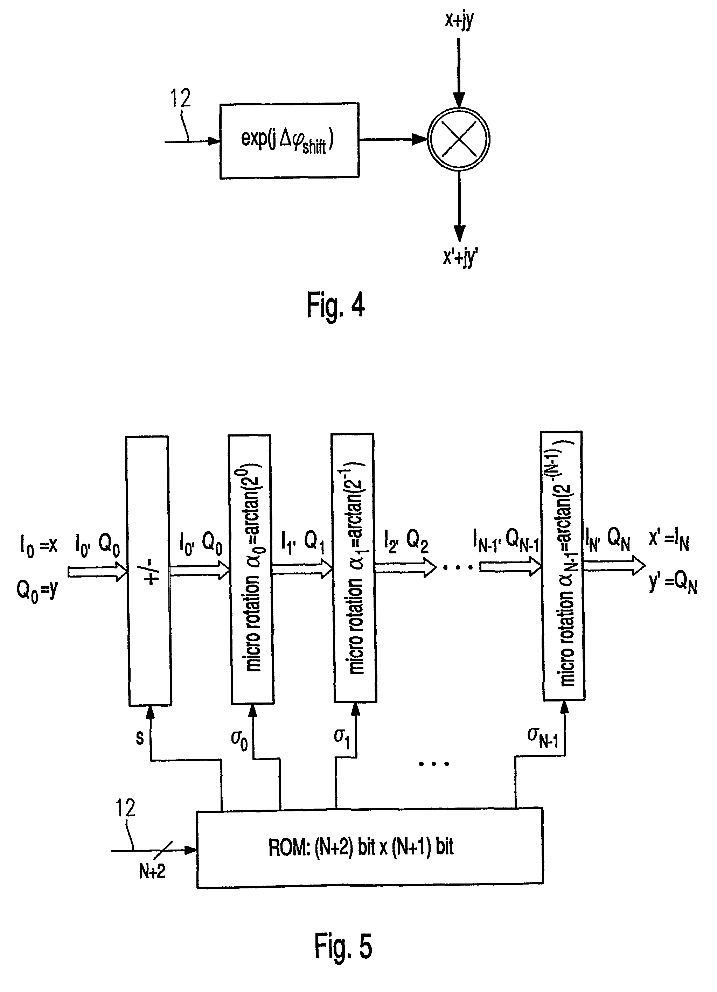

Diese allgemeine Ausführungsform gemäß Fig.1 löst die Aufgabe der vorliegenden Erfindung und erfüllt darüber hinaus die oben aufgezählten Bedingungen a) ― i) und löst die darin genannten Problemstellungen, woraus folgende Vorteile entstehen:
a) Das Systemsteuergerät 10 selbst schaltet zwischen den Verstärkungsfaktoren der Verstärkerstufe 30 um und kennt daher den exakten Zeitpunkt des Umschaltens. Damit ist das Systemsteuergerät vorteilhafterweise in der Lage, den Zeitpunkt, wann der Phasensprung im Empfangssignal am Eingang der Einrichtung zur Phasenkorrektur 20 auftritt, zu ermitteln. Die Laufzeiten des Demodulators und A/D-Umsetzers 40 sind dabei feste, deterministische Systemgrössen, die dem Systemsteuergerät bekannt sind. Daher kann das Systemsteuergerät 10 der Einheit zur Phasenkorrektur 20 den Zeitpunkt über ein Steuersignal 102 mitteilen, wann eine Korrektur erfolgen muß.
b) Die Höhe der Phasensprünge, die beim Umschalten von einem zum anderen Verstärker auftreten, sind ebenfalls feste, deterministische Systemgrössen und dem Systemsteuergerät 10 ebenso bekannt. Daher kann das Systemsteuergerät 10 der Einheit zur Phasenkorrektur 20 die Höhe des Phasensprungs, der korrigiert werden muss, über ein weiteres Steuersignal 103 mitteilen.
c) Nach der Korrektur ist idealerweise kein Phasensprung mehr sichtbar oder es ist nur noch ein kleiner Sprung vorhanden, der vom nachfolgenden Empfänger ausreichend schnell ausgeregelt werden kann, so dass keine signifikanten Bitfehler entstehen können. Der Empfänger wird also durch die erfindungsgemäße Anordnung entlastet und eine verbesserte Bitfehlerrate geht einher.
   Zusätzlich kann die Erfindung, wie noch an den Ausführungsbeispielen im einzelnen zu sehen sein wird, über folgende Merkmale verfügen:
d) Die Einrichtung zur Phasensprungkorrektur 20 kann im allgemeinsten Fall einen komplexen Multiplizierer gemäß Fig. 4 enthalten, der die Eingangswerte mit einem komplexen Drehfaktor exp(jΔϕ_{SHIFT}) dreht und somit eine Kompensation des Phasensprungs bewirkt.
e) Statt eines komplexen Multiplizierers kann auch eine Anordnung implementiert sein, welche die Drehung multipliziererfrei mit Hilfe des CORDIC-Algorithmus gemäß Fig. 5 durchführt, wie es in der deutschen Offenlegungsschrift DE 199 48 899 A1 beschrieben ist, welche hiermit vollständig in den Offenbarungsgehalt der vorliegenden Anmeldung einbezogen wird.
f) Die Einrichtung zur Phasensprungkorrektur kann zugleich als Frequenzkorrekturglied verwendet werden, wenn gemäß Fig. 2 und Fig. 3 ein Phasenakkumulator, bestehend aus einer über ein Verzögerungsglied 22 rückgekoppelten Addiererstufe 21, der Einrichtung zur Phasensprungkorrektur 20 vorgeschaltet ist. Für die Frequenzkorrektur wird ein bestimmtes Phaseninkrement Δϕ_{INC} als Eingangsgrösse für den Phasenakkumulator vorgegeben. Soll gleichzeitig ein Phasensprung korrigiert werden, wird der Phasensprungkorrekturwert Δϕ_{SHIFT} mit Hilfe eines zusätzlichen Addierers 23 einmalig zum Eingangssignal des Phasenakkumulators hinzuaddiert, wie Fig. 2 zeigt. Alternativ dazu kann das Phaseninkrement Δϕ_{INC} einmalig modifiziert oder für einen Arbeitstakt auf einen anderen Wert Δϕ'_{SHIFT} mit Hilfe des Multiplexers 24 gemäss Fig. 3 umgeschaltet werden. Vorteil dieser Realisierungsform ist, dass aufgrund der rückgekoppelten Addiererstufe, die als Integrator wirkt, für die Korrektur eines Phasensprungs nur einmal eine Aktion ausgeführt werden muss und die Phasen-korrektur dauerhaft wirksam ist. Der aktuelle Phasenkorrekturwert ist außerdem nicht vom vorangehenden Geschehen abhängig.

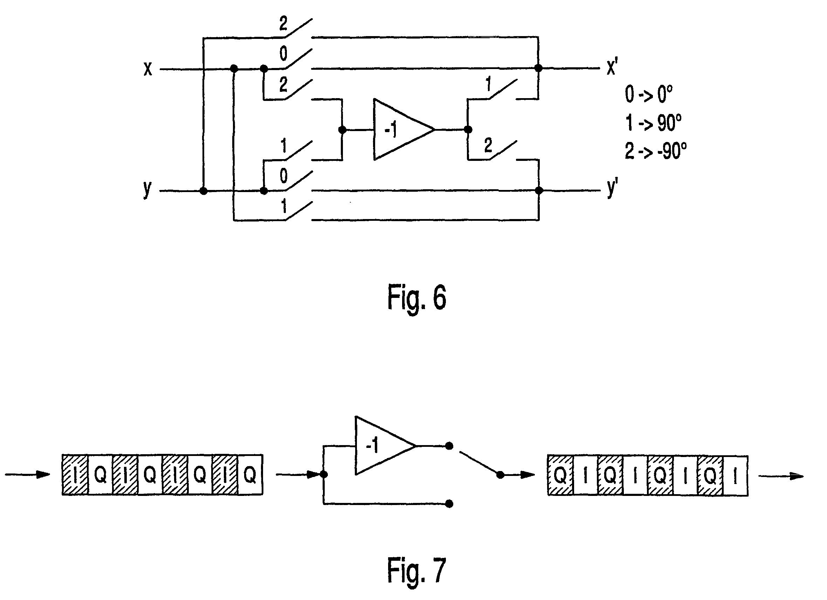

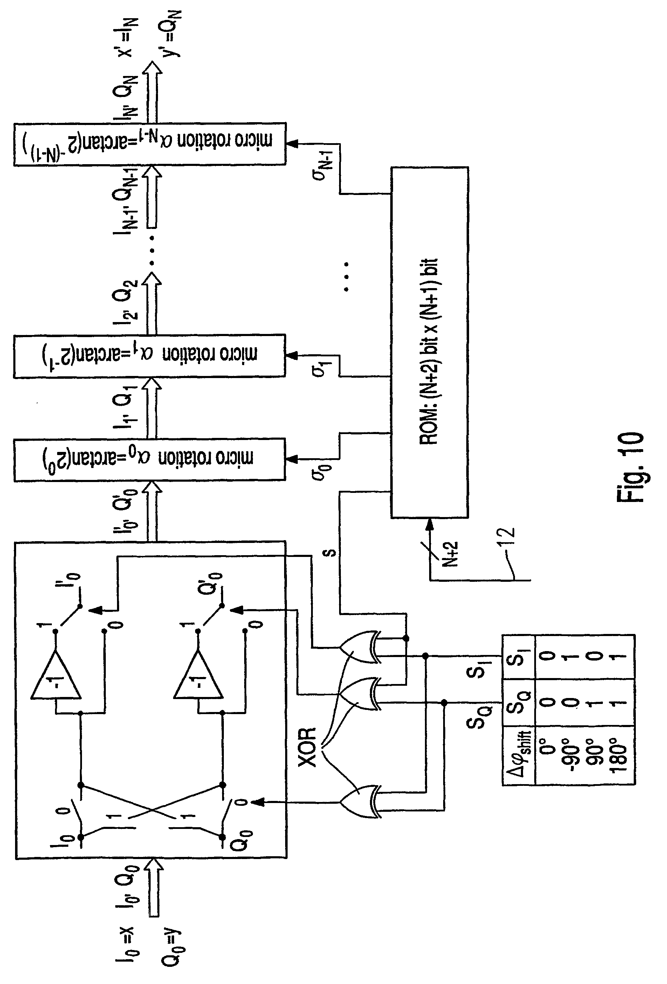

Die vorliegende Erfindung kann folgende zusätzliche Besonderheiten aufweisen:
a) In vielen Anwendungsfällen treten nur Phasensprünge von 0°, 90° oder -90° auf. In diesen Fällen kann in der erfindungsgemäßen Anordnung eine besonders effiziente multipliziererfreie Struktur gemäß Fig. 6 verwendet werden, die nur Schalter und einen Inverter enthält.
b) Werden die Abtastwerte im Falle a) nicht parallel, d.h. zeitgleich, sondern im Zeitmultiplexverfahren für Normal- (I) und Quadraturkomponente (Q) verarbeitet, können 0°, 90° und -90° Sprünge mit nur einem Multiplexer und einem Inverter gemäß Fig. 7 kompensiert werden.
c) Die Anordnungen nach a) oder b) gemäß Fig. 6 und Fig. 7 lassen sich besonders vorteilhaft mit einem Frequenzkorrekturglied, welches den CORDIC-Algorithmus verwendet, kombinieren, da die CORDIC-Struktur bereits einen Inverter enthält. Es ist lediglich ein zweites Steuersignal erforderlich, wie Fig. 10 zeigt.

Im folgenden werden die weiteren Ausführungsformen anhand der Zeichnungsfiguren näher erläutert.

Fig. 2 zeigt eine Anordnung, die ergänzend zu Fig. 1 weitere Elemente für die gemeinsame Realisierung mit einer zusätzlichen Frequenzkorrektur enthält.

Das Systemsteuergerät 10 schaltet zunächst über die Verbindung 101 den Verstärkungsfaktor um und programmiert den entdung 101 den Verstärkungsfaktor um und programmiert den entsprechenden Korrekturwert Δϕ_{SHIFT} 103. Wenn der dadurch verursachte Phasensprung im Eingangssignal x + jy auftritt, wird der Multiplexer 24 für die Dauer eines Addierzyklus mittels des Steuersignals 102 in Schalterstellung 1 gebracht. Dadurch wird erreicht, dass der Phasensprung im Phasenakkumulator durch einmalige Addition des Korrekturwerts mit dem Addierer 23 dauerhaft kompensiert ist. In der übrigen Zeit steht der Multiplexer 24 in Stellung 0, d.h. es wird keine weitere Phasenkorrektur vorgenommen.

Fig. 3 zeigt eine Anordnung, die im Gegensatz zu Fig. 2 zur Aufwandsminimierung nur einen einzigen Addierer 21 verwendet, dafür muss jedoch das Systemsteuergerät 10 einen entsprechend der zugleich stattfindenden Frequenzkorrektur modifizierten Wert Δϕ'_{SHIFT} = Δϕ'_{SHIFT} + Δϕ' _{INC} zur Verfügung stellen, was im Allgemeinen jedoch keinen Nachteil darstellt. Die Funktion des Multiplexers ist identisch zu der in Fig. 2 dargestellten Variante.

Fig. 4 zeigt die allgemeinste Realisierungsform der Einheit zur Phasensprungkorrektur bzw. Frequenzkorrektur 20 nach Fig. 2 oder Fig. 3 in Form eines komplexwertigen Multiplizierers, welcher das komplexwertige Eingangssignal x + jy um einen Winkel 12 (Phase) Δϕ_{SHIFT} dreht und das komplexwertige Ausgangssignal x' + jy' ausgibt.

Fig. 5 zeigt die Struktur einer multipliziererfreien Anordnung für die Einheit zur Phasen- bzw. Frequenzkorrektur 20 nach Fig. 2 oder Fig. 3, welche nach dem CORDIC-Verfahren arbeitet, wie es beispielsweise in der deutschen Offenlegungsschrift DE 199 48 899 A1 beschrieben ist, welche hiermit insbesondere hinsichtlich des CORDIC-Algorithmus vollständig in den Offenbarungsgehalt der vorliegenden Anmeldung einbezogen wird. Als Eingangssignal, welches die Phase bestimmt, dient das Ausgangssignal des Phasenakkumulators 12 aus Fig. 2 oder Fig. 3. Das Signal s ist logisch 1, wenn eine Vorzeichenumkehr der Eingangssignale bewirkt werden soll.

Fig. 6 zeigt eine spezielle, besonders aufwandsgünstige Realisierungsform der Einheit zur Phasensprungkorrektur 20 nach Fig. 1, die geeignet ist, Phasensprünge von 0°, 90° oder -90° zu korrigieren. Die drei verschiedenen Phasenwerte werden mit den Multiplexerstellungen 0, 1 und 2 kodiert.

Fig. 7 zeigt ebenfalls eine spezielle, besonders aufwandsgünstige Realisierungsform der Einheit zur Phasensprungkorrektur 20 nach Fig. 1, die geeignet ist, Phasensprünge von 0°, 90° oder -90° zu korrigieren, falls die Normal- (I) und Quadraturkomponente (Q) im Zeitmultiplex vorliegen bzw. verarbeitet werden. Die nachfolgende Verarbeitungseinheit interpretiert dann im Fall von 90° und -90° Zeitschlitze, die vorher der Normalkomponente zugeordnet waren als Quadraturkomponente und umgekehrt. Der Inverter invertiert dabei jeden zweiten Datenwert.

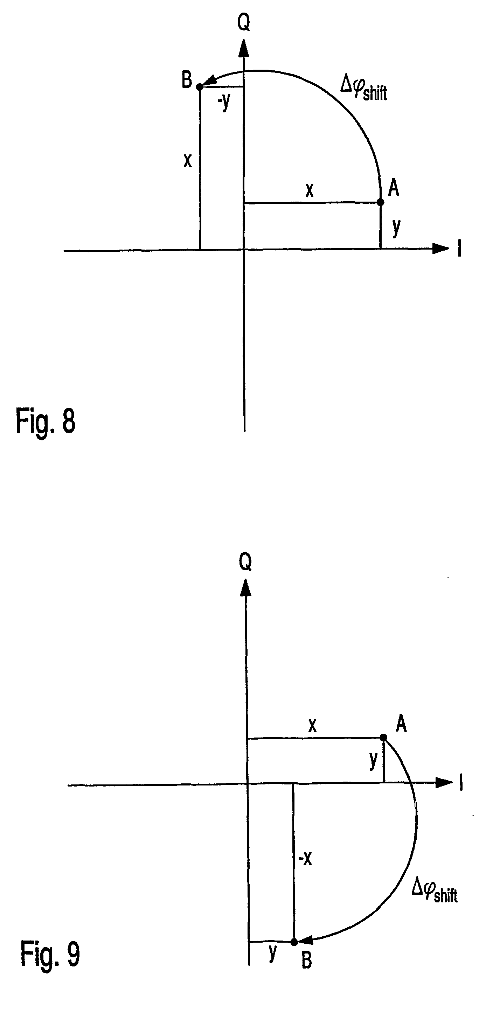

Fig. 8 und Fig. 9 veranschaulichen, wie die in Fig. 6 und Fig. 7 gezeigten Anordnungen die Phasendrehungen des Punktes A um 90° bzw. -90° zum Punkt B hin vornehmen.

Die Anordnung in Fig. 6 läßt sich besonders vorteilhaft mit einem Frequenzkorrekturglied, welches den CORDIC-Algorithmus verwendet, kombinieren, da die CORDIC-Struktur in Fig. 5 bereits einen Inverter enthält. Es ist lediglich ein zweites Steuersignal für die Vorzeicheninvertierung erforderlich, wie Fig. 10 zeigt. Im Block in Fig.10, der die Vorzeichenumkehr darstellt, sind die Vorzeichen für I und Q gegenüber Fig. 5 nun getrennt invertierbar. Weiterhin ist die Anordnung um einen Kreuzschalter erweitert, der die Eingangssignale vertauscht, wenn das zugehörige Steuersignal logisch 1 ist. Zusätzlich zum Phasenwert 12, den der Phasenakkumulator zur Frequenzkorrektur bereitstellt, werden im vorliegenden Ausführungsbeispiel zwei weitere Steuersignale S_{I} und S_{Q} von dem Systemsteuergerät statt dem Wert Δϕ_{SHIFT} bereitgestellt werden, welche den zu korrigierenden Phasensprungwert 0°, -90°, 90° oder 180° repräsentieren. Diese Steuersignale müssen im Gegensatz zum Ausführungsbeispiel in Fig. 2 oder Fig. 3 permanent anliegen. Die Steuersignale des Kreuzschalters und der Multiplexer lassen sich aus den Signalen s, S_{I} und S_{Q} durch einfache Verknüpfung mit einem XOR-Gatter gewinnen, wie Fig. 10 zeigt.

## Patentansprüche

1. Vorrichtung zur Korrektur von Phasensprüngen in Empfangssignalen von Mobilstationen, wobei
- im Empfangspfad der Mobilstation schaltbare Komponenten (30) mit mindestens zwei schaltbaren Zuständen enthalten sind, die beim Umschalten Phasensprünge im Empfangssignal erzeugen, welche **dadurch gekennzeichnet ist, dass**
- eine Einrichtung zur Phasenkorrektur (20) korrigierbar sind, und
- ein Systemsteuergerät (10) die hierfür notwendigen Parameter, insbesondere die Phasensprunghöhe und den Phasensprungzeitpunkt, an die Einrichtung zur Phasenkorrektur (20) übermittelt.

2. Vorrichtung nach Anspruch 1,
**dadurch gekennzeichnet, dass**
- das Systemsteuergerät (10) derart ausgelegt ist, dass es die schaltbaren Komponenten (30), insbesondere den Verstärkungsfaktor der Verstärkerstufe (30), umschaltet, und dass es diese Eigenschaft für die Bestimmung des Phasensprungzeitpunkts nutzt.

3. Vorrichtung nach Anspruch 1 oder 2,
**dadurch gekennzeichnet, dass**
- die Einheit zur Phasenkorrektur (20) gleichzeitig sowohl eine Phasensprungkorrektur als auch eine Frequenzkorrektur vornimmt (Fig.2, Fig.3).

4. Vorrichtung nach einem der vorhergehenden Ansprüche,
**dadurch gekennzeichnet, dass**
- die Einheit zur Phasenkorrektur (20) eine Struktur beinhaltet, die auf dem Prinzip des CORDIC-Algorithmus basiert.

5. Vorrichtung nach einem der vorhergehenden Ansprüche,
**dadurch gekennzeichnet, dass**
- die Einheit zur Phasenkorrektur (20) eine Struktur beinhaltet, die speziell Phasenkorrekturen von 0°, 90° und -90° oder auch 180° multipliziererfrei realisiert (Fig.6).

6. Vorrichtung nach Anspruch 5,
**dadurch gekennzeichnet , dass**
- genau ein Multiplexer für die Verarbeitung der Normal- und Quadraturkomponente im Zeitmultiplexverfahren vorhanden ist (Fig.7).

7. Vorrichtung nach Anspruch 5,
**dadurch gekennzeichnet, dass**
- die Einheit zur Phasenkorrektur (20) um 0°, 90°, -90° oder 180° mit einer Einheit zur Frequenzkorrektur, welche auf dem Prinzip des CORDIC-Algorithmus beruht, kombiniert ist (Fig.10).

8. Vorrichtung nach Anspruch 5,
**dadurch gekennzeichnet, dass**
- die Einheit zur Phasenkorrektur (20) um 0°, 90°, -90° oder 180° mit Mitteln zur analogen Signalverarbeitung realisiert und insbesondere auf dem Baustein integriert ist, der die schaltbaren analogen Komponenten enthält.

9. Vorrichtung nach einem der vorhergehenden Ansprüche,
**dadurch gekennzeichnet, dass**
- sie in demselben Baustein wie ein digitale Signalempfänger integriert ist.

10. Mobilstation mit einer Vorrichtung nach einem oder mehreren der vorhergehenden Ansprüche, welche insbesondere die Standards UMTS FDD, UMTS TDD, GSM (GMSK-Modulation), EDGE (3π/8-8-PSK-Modulation) sowie TIA-/EIA-136 (π/4-DQPSK-Modulation oder 8-PSK-Modulation) oder Teilkombinationen hiervon unterstützt.

11. Verfahren zur Korrektur von Phasensprüngen in Empfangssignalen von Mobilstationen, wobei
- im Empfangspfad der Mobilstation beim Umschalten schaltbarer Komponenten (30) mit mindestens zwei schaltbaren Zuständen Phasensprünge im Empfangssignal erzeugt werden, und **dadurch gekennzeichnet ist, dass**
- eine Einrichtung zur Phasenkorrektur (20) die Phasensprünge korrigiert und ein Systemsteuergerät (10) die hierfür notwendigen Parameter, insbesondere die Phasensprunghöhe und den Phasensprungzeitpunkt, an die Einrichtung zur Phasenkorrektur (20) übermittelt.

12. Verfahren nach Anspruch 11,
**dadurch gekennzeichnet, dass**
- das Systemsteuergerät (10) auch die schaltbaren Komponenten (30), insbesondere den Verstärkungsfaktor der Verstärkerstufe (30) umschaltet und insbesondere diese Eigenschaft für die Bestimmung des Phasensprungzeitpunkts nutzt.

13. Verfahren nach Anspruch 11 oder 12,
**dadurch gekennzeichnet, dass**
- die Einheit zur Phasenkorrektur (20) gleichzeitig sowohl eine Phasensprungkorrektur als auch eine Frequenzkorrektur vornimmt (Fig.2, Fig.3).

14. Verfahren nach einem der Ansprüche 11 bis 13,
**dadurch gekennzeichnet, dass**
- die Einheit zur Phasenkorrektur (20) eine Struktur beinhaltet, die auf dem Prinzip des CORDIC-Algorithmus basiert.

15. Verfahren nach einem der Ansprüche 11 bis 14,
**dadurch gekennzeichnet, dass**
- die Einheit zur Phasenkorrektur (20) eine Struktur beinhaltet, die speziell Phasenkorrekturen von 0°, 90° und -90° oder auch 180° multipliziererfrei realisiert (Fig.6).

16. Verfahren nach Anspruch 15,
**dadurch gekennzeichnet, dass**
- Normal- und Quadraturkomponente im Zeitmultiplexverfahren verarbeitet werden und nur ein Multiplexer verwendet wird (Fig.7).

17. Verfahren nach Anspruch 15,
**dadurch gekennzeichnet , dass**
- die Einheit zur Phasenkorrektur um 0°, 90°, -90° oder 180° mit einer Einheit zur Frequenzkorrektur, weiche auf dem Prinzip des CORDIC-Algorithmus beruht, kombiniert ist (Fig.10).

18. Verfahren nach Anspruch 15,
**dadurch gekennzeichnet, dass**
- die Einheit zur Phasenkorrektur um 0°, 90°, -90° oder 180° mit Mitteln zur analogen Signalverarbeitung realisiert und insbesondere auf dem Baustein integriert ist, der die schaltbaren analogen Komponenten enthält.

19. Verfahren nach einem der Ansprüche 11 bis 18,
**dadurch gekennzeichnet, dass**
- die Anordnung bzw. das Verfahren im selben Baustein integriert ist wie ein digitale Signalempfänger.

20. Verfahren nach einem der Ansprüche 11 bis 19,
**dadurch gekennzeichnet, dass**
- es in Mobilstationen eingesetzt wird, die insbesondere die Standards UMTS FDD, UMTS TDD, GSM (GMSK-Modulation), EDGE (3π/8-8-PSK-Modulation) sowie TIA/EIA-136 (π/4-DQPSK-Modulation oder 8-PSK-Modulation) oder Teilkombinationen hiervon unterstützen.

## Claims

1. Apparatus for correcting sudden phase changes in received signals in mobile stations,
where
- the mobile station's reception path contains switchable components (30) having at least two switchable states which produce sudden phase changes in the received signal upon changeover, which is **characterized in that**
- a device for phase correction (20) is able to be corrected, and
- a system control unit (10) transmits the parameters required for this, particularly the level of the sudden phase change and the time of the sudden phase change, to the device for phase correction (20).

2. Apparatus according to Claim 1,
**characterized in that**
- the system control unit (10) is designed such that it changes over the switchable components (30), particularly the gain factor for the amplifier stage (30), and that it uses this property to determine the time of the sudden phase change.

3. Apparatus according to Claim 1 or 2,
**characterized in that**
- the unit for phase correction (20) simultaneously performs both correction of sudden phase changes and frequency correction (Figure 2, Figure 3).

4. Apparatus according to one of the preceding claims,
**characterized in that**
- the unit for phase correction (20) contains a structure which is based on the principle of the CORDIC algorithm.

5. Apparatus according to one of the preceding claims,
**characterized in that**
- the unit for phase correction (20) contains a structure which specifically implements phase corrections of 0°, 90° and -90° or else 180° without a multiplier (Figure 6).

6. Apparatus according to Claim 5,
**characterized in that**
- precisely one multiplexer is provided for processing the normal and quadrature components using time-division multiplexing (Figure 7).

7. Apparatus according to Claim 5,
**characterized in that**
- the unit for phase correction (20) by 0°, 90°, -90° or 180° is combined with a unit for frequency correction which is based on the principle of the CORDIC algorithm (Figure 10).

8. Apparatus according to Claim 5,
**characterized in that**
- the unit for phase correction (20) by 0°, 90°, -90° or 180° is implemented using means for analog signal processing and, in particular, is integrated on the chip which contains the switchable analog components.

9. Apparatus according to one of the preceding claims,
**characterized in that**
- it is integrated in the same chip as a digital signal receiver.

10. Mobile station having an apparatus according to one or more of the preceding claims, which supports, in particular, the standards UMTS FDD, UMTS TDD, GSM (GMSK modulation), EDGE (3π/8-8 PSK modulation) and also TIA/EIA-136 (π/4-DQPSK modulation or 8-PSK modulation) or part combinations thereof.

11. Method for correcting sudden phase changes in received signals in mobile stations,
wherein
- the mobile station's reception path produces sudden phase changes in the received signal when switchable components (30) having at least two switchable states change over, and **characterized in that**
- a device for phase correction (20) corrects the sudden phase changes, and a system control unit (10) transmits the parameters required for this, particularly the level of the sudden phase change and the time of the sudden phase change, to the device for phase correction (20).

12. Method according to Claim 11,
**characterized in that**
- the system control unit (10) also changes over the switchable components (30), particularly the gain factor for the amplifier stage (30), and, in particular, uses this property to determine the time of the sudden phase change.

13. Method according to Claim 11 or 12,
**characterized in that**
- the unit for phase correction (20) simultaneously performs both correction of sudden phase changes and frequency correction (Figure 2, Figure 3).

14. Method according to one of Claims 11 to 13,
**characterized in that**
- the unit for phase correction (20) contains a structure which is based on the principle of the CORDIC algorithm.

15. Method according to one of Claims 11 to 14,
**characterized in that**
- the unit for phase correction (20) contains a structure which specifically implements phase corrections of 0°, 90° and -90° or else 180° without a multiplier (Figure 6).

16. Method according to Claim 15,
**characterized in that**
- the normal and quadrature components are processed using time-division multiplexing, and only one multiplexer is used (Figure 7).

17. Method according to Claim 15,
**characterized in that**
- the unit for phase correction by 0°, 90°, -90° or 180° is combined with a unit for frequency correction which is based on the principle of the CORDIC algorithm (Figure 10).

18. Method according to Claim 15,
**characterized in that**
- the unit for phase correction by 0°, 90°, -90° or 180° is implemented using means for analog signal processing and, in particular, is integrated on the chip which contains the switchable analog components.

19. Method according to one of Claims 11 to 18,
**characterized in that**
- the arrangement or the method is integrated in the same chip as a digital signal receiver.

20. Method according to one of Claims 11 to 19,
**characterized in that**
- it is used in mobile stations which support, in particular, the standards UMTS FDD, UMTS TDD, GSM (GMSK modulation), EDGE (3π/8-8 PSK modulation) and also TIA/EIA-136 (π/4-DQPSK modulation or 8-PSK modulation) or part combinations thereof.

## Revendications

1. Dispositif de correction de sauts de phase dans des signaux de réception de station mobile, dans lequel
- dans le trajet de réception de la station mobile sont contenus des composants (30) commutables ayant au moins deux états commutables qui produisent, lors de la commutation, des sauts de phase dans le signal de réception,
**caractérisé en ce que**
- les sauts de phase peuvent être corrigés par un dispositif de correction (20) de phase et par
- un appareil (10) de commande de système, qui transmet les paramètres nécessaires à cet effet, notamment la hauteur du saut de phase et l'instant du saut de phase, au dispositif de correction de phase (20).

2. Dispositif suivant la revendication 1, **caractérisé en ce que**
- l'appareil (10) de commande de système est conçu de manière à commuter les composants (30) commutables, notamment le coefficient d'amplification de l'étage (30) amplificateur, et **en ce qu'**il utilise cette propriété pour la détermination de l'instant du saut de phase.

3. Dispositif suivant la revendication 1 ou 2, **caractérisé en ce que**
- l'unité de correction de phase (20) effectue en même temps à la fois une correction de saut de phase et une correction de fréquence (figure 2, figure 3).

4. Dispositif suivant l'une des revendications précédentes, **caractérisé en ce que**
- l'unité de correction de phase (20) contient une structure qui est basée sur le principe de l'algorithme CORDIC.

5. Dispositif suivant l'une des revendications précédentes, **caractérisé en ce que**
- l'unité de correction de phase (20) contient une structure qui réalise spécialement des corrections de phase de 0°, 90°, -90° ou aussi de 180° sans multiplication (figure 6).

6. Dispositif suivant la revendication 5, **caractérisé en ce que**
- il est présent exactement un multiplexeur pour le traitement de la composante normale et de la composante à quadrature dans le procédé de multiplexage à répartition dans le temps (figure 7).

7. Dispositif suivant la revendication 5, **caractérisé en ce que**
- l'unité de correction de phase (20) de 0°, de 90°, de -90° ou de 180° est combinée à une unité de correction de fréquence, qui repose sur le principe de l'algorithme CORDIC (figure 10).

8. Dispositif suivant la revendication 5, **caractérisé en ce que**
- l'unité de correction de phase (20) de 0°, de 90°, de -90° ou de 180° est réalisée par des moyens de traitement analogiques du signal et est notamment intégrée sur le module qui contient les composants analogiques commutables.

9. Dispositif suivant l'une des revendications précédentes, **caractérisé en ce que**
- il est intégré dans un même module qu'un récepteur numérique de signal.

10. Station mobile ayant un dispositif suivant l'une ou plusieurs des revendications précédentes qui assiste notamment les standards UMTS FDD, UMTS TDD, GSM (modulation GMSK), EDGE (modulation 3π/8-8-PSK) ainsi que TIA/EIA-136 (modulation π/4-DQPSK ou modulation 8-PSK) ou leurs sous-combinaisons.

11. Procédé de correction de sauts de phase dans des signaux de réception de station mobile, dans lequel
- on produit dans le trajet de réception de la station mobile, lors de la commutation de composants (30) commutables ayant au moins deux états commutables, des sauts de phase dans le signal de réception et **caractérisé en ce que**
- un dispositif de correction de phase (20) corrige les sauts de phase et un appareil (10) de commande de système transmet les paramètres nécessaires à cet effet, notamment la hauteur du saut de phase et l'instant du saut de phase, au dispositif de correction de phase (20).

12. Procédé suivant la revendication 1, **caractérisé en ce que**
- l'appareil (10) de commande de système est conçu de manière à commuter les composants (30) commutables, notamment le coefficient d'amplification de l'étage (30) amplificateur, et **en ce qu'**il utilise cette propriété pour la détermination de l'instant du saut de phase.

13. Procédé suivant la revendication 11 ou 12, **caractérisé en ce que**
- l'unité de correction de phase (20) effectue en même temps à la fois une correction de saut de phase et une correction de fréquence (figure 2, figure 3).

14. Procédé suivant l'une des revendications 11 à 13, **caractérisé en ce que**
- l'unité de correction de phase (20) contient une structure qui est basée sur le principe de l'algorithme CORDIC.

15. Procédé suivant l'une des revendications 11 à 14, **caractérisé en ce que**
- l'unité de correction de phase (20) contient une structure qui réalise spécialement des corrections de phase de 0°, 90°, -90 ou aussi de 180° sans multiplication (figure 6).

16. Procédé suivant la revendication 15, **caractérisé en ce que**
- On traite des composantes normale et en quadrature dans le procédé de multiplexage à répartition dans le temps et on n'utilise qu'un multiplexeur (figure 7).

17. Procédé suivant la revendication 15, **caractérisé en ce que**
- l'unité de correction de phase (20) de 0°, de 90°, de -90° ou de 180° est combinée à une unité de correction de fréquence, qui repose sur le principe de l'algorithme CORDIC (figure 10).

18. Procédé suivant la revendication 15, **caractérisé en ce que**
- l'unité de correction de phase (20) de 0°, de 90°, de -90° ou de 180° est réalisée par des moyens de traitement analogiques du signal et est notamment intégrée sur le module qui contient les composants analogiques commutables.

19. Procédé suivant l'une des revendications 11 à 18, **caractérisé en ce que**
- le dispositif ou le procédé est intégré dans le même module qu'un récepteur numérique de signal.

20. Procédé suivant l'une des revendications 11 à 19, **caractérisé en ce que**
il est utilisé dans des stations mobiles qui assistent un dispositif suivant l'une ou plusieurs des revendications précédentes, notamment les standards UMTS FDD, UMTS TDD, GSM (modulation GMSK), EDGE (modulation 3π/8-8-PSK) ainsi que TIA/EIA-136 (modulation π/4-DQPSK ou modulation 8-PSK) ou leurs sous-combinaisons.
